# EUROPÄISCHE PATENTSCHRIFT

(11) **EP 2 445 736 B1**
(45) Veröffentlichungstag und Bekanntmachung des Hinweises auf die Patenterteilung: **31.07.2013**
(21) Anmeldenummer: 10720269.9
(22) Anmeldetag: 05.05.2010
(51) Int. Cl.: B60G 17/04, B60G 17/052, F15B 11/16

(54) **DRUCKLUFTVERSORGUNGSSYSTEM FÜR EINEN DRUCKLUFTVERBRAUCHERKREIS, INSBESONDERE FÜR EIN LUFTFEDERUNGSSYSTEM**
COMPRESSED AIR SUPPLY SYSTEM FOR A COMPRESSED AIR CONSUMER CIRCUIT, IN PARTICULAR FOR AN AIR SPRING SYSTEM
SYSTEME D'ALIMENTATION EN AIR COMPRIME POUR UN CIRCUIT CONSOMMATEUR D'AIR COMPRIME, NOTAMMENT POUR UN SYSTEME DE SUSPENSION PNEUMATIQUE

(30) Priorität: 23.06.2009 DE 102009029898
(43) Veröffentlichungstag der Anmeldung: 02.05.2012
(73) Patentinhaber: WABCO GmbH, 30453 Hannover (DE)
(72) Erfinder: DIEKMEYER, Heinrich, 30890 Barsinghausen (DE)
(74) Vertreter: Lauerwald, Jörg
(86) Internationale Anmeldenummer: PCT/EP2010/002750
(87) Internationale Veröffentlichungsnummer: WO 2010/149244

(56) Entgegenhaltungen:
- EP-A1- 1 361 132
- EP-A1- 1 502 778
- EP-A2- 1 243 447
- DE-A1- 10 004 091
- DE-B3- 10 322 578
- DE-B3-102004 038 705
- US-A1- 2003 047 853

## Beschreibung

Die Erfindung betrifft allgemein eine Druckluftaufbereitungsanlage/-einheit sowie die Druckluftverteilung und Kreisabsicherung. Die Erfindung bezieht sich ferner auf ein Druckluftsystem wie z.B. ein Luftfederungssystem, das beispielsweise für Fahrzeuge wie etwa Nutzfahrzeuge einsetzbar ist.

DE 100 04091 C2 offenbart eine Fahrzeug-Druckluftversorgungseinrichtung mit einem Kompressor und einem Mehrkreis-Schutzventil, dessen mit Druckluftbehältern versehene Kreise über eine Versorgungsleitung mit Druckluft versorgt werden. Bei der bekannten Einrichtung sind u. a. keine schnellen Luftfederungs-Hebevorgänge möglich.

DE 10 2004 038 705 B3 offenbart eine Druckluftanlage.

Der vorliegenden Erfindung liegt die Aufgabe zugrunde, ein Druckluftversorgungssystem, insbesondere für ein Luftfederungssystem so auszubilden, dass eine verbesserte Funktion bzw. ein verbessertes Steuerungsverhalten bereitgestellt wird.

Diese Aufgabe wird mit den Merkmalen des Anspruchs 1 gelöst.

Vorteilhafte, zweckmäßige und/oder alternative Ausgestaltungen sind in den weiteren Ansprüchen angegeben.

Erfindungsgemäß ist es möglich, schnelle Funktionsfähigkeit des Verbrauchersystems wie etwa der Luftfederung zu erreichen, zum Beispiel beim Auffüllen der leeren Druckluftanlage des Fahrzeuges oder bei Luftfeder-Hebevorgängen. Damit ist das Fahrzeug schneller verfügbar.

Ausführungsbeispiele der Erfindung erlauben eine rasche Auffüllung des oder der Luftfederbälge. Ferner zeichnen sich Ausführungsbeispiele der Erfindung durch geringen Aufwand und niedrige Kosten aus.

Der oder die Bälge des Luftfederungssystems können beim Heben rasch auf hohe Drücke gebracht werden, ohne dass Behälter zeitaufwändig mit aufgefüllt werden müssen.

Ausführungsbeispiele bieten den Vorteil der Möglichkeit zur vorrangigen Förderung des Kompressors in die Luftfederbälge, ohne dass Behälter mit aufgefüllt werden. Dies auch bei hohen Balgdrücken, ohne im Normalbetrieb auf den Luftaustausch zwischen den Kreisen verzichten zu müssen. Zusätzlich ist es möglich, die Druckluft in den Behältern zur raschen Auffüllung des oder der Luftfederbälge effektiv auszunutzen.

Ausführungsbeispiele der Erfindung erlauben es, Luftfeder-Hebe-Vorgänge (z.B. beim Wechseln von Pritschen) sehr rasch ablaufen zu lassen.

Ausführungsbeispiele der Erfindung lassen sich allgemein bei der Druckluftverteilung und Kreisabsicherung und/oder bei einer Druckluftaufbereitungsanlage/-einheit einsetzen.

Nachstehend werden Ausführungsbeispiele der Erfindung anhand der beigefügten Zeichnungen näher beschrieben.
Fig.1 zeigt ein Ausführungsbeispiel eines Druckluftversorgungssystems einschließlich einer Ventilanordnung gemäß einer erfindungsgemäßen Ausgestaltung;
Fig. 2 zeigt ein weiteres Ausführungsbeispiel des erfindungsgemäßen Druckluftversorgungssystems mit abgeänderter Ventilanordnung; und
Fig. 3 zeigt ein Ausführungsbeispiel eines Prioritätsventils mit Rückströmung, das bei dem erfindungsgemäßen Versorgungssystem für etwa einem Luftfederungssystem einsetzbar ist.

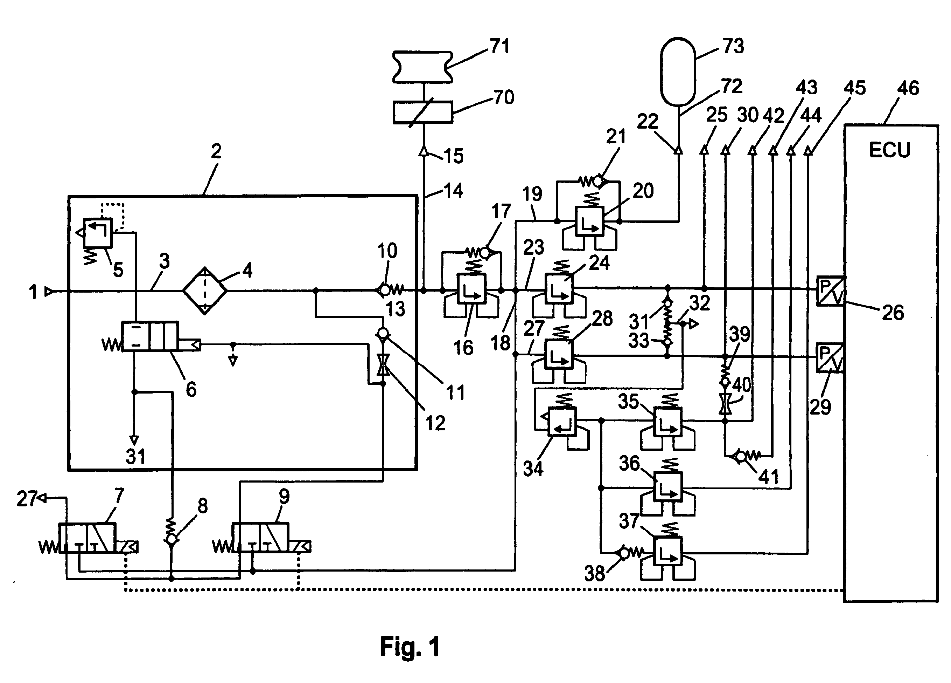

Fig. 1 zeigt ein Ausführungsbeispiel eines Druckluft-Versorgungssystems mit angeschlossenem Luftfederungssystem mit einer Ventilanordnung gemäß einer erfindungsgemäßen Ausführung. Das Versorgungssystem ist Teil einer Druckluftaufbereitungsanlage, die einen nicht gezeigten Kompressor enthält, der an einen Eingang 1 eines Lufttrocknerteils 2 angeschlossen ist. Vom Eingang 1 führt eine Druckluftversorgungsleitung 3 über einen mit Filter versehenen Lufttrockner 4 zu einem Rückschlagventil 10.

An die Druckluftversorgungsleitung 3 sind ein Überdruckventil 5 sowie ein drucksteuerbares Ventil 6 angeschlossen. Mit dem Ventilausgang des Ventils 6 sind ein Ausgangsanschluss sowie der Ausgang eines Rückschlagventils 8 verbunden, dessen Eingang an Ventile 7, 9 angeschlossen ist. Ein Rückschlagventil 11 ist in die Druckluftversorgungsleitung 3 zwischen dem Lufttrockner 4 und das Rückschlagventil 10 eingefügt und über eine Drossel 12 mit dem Ventil 9 verbunden. Wenn der Kompressor fördert, baut sich Druck in der Druckluftversorgungsleitung 3 auf und öffnet das Rückschlagventil 10, während das Rückschlagventil 11 sperrt.

Das Rückschlagventil 10 ist ausgangsseitig an eine Verzweigung 13 angeschlossen, die über eine Fluid-Druckleitung 14 mit einem Anschluss 15 verbunden ist, an den ein oder mehrere elektronisch steuerbare Ventile, ECAS-Ventile, 70 des Luftfederungssystem oder alternativ oder zusätzlich eines anderen Verbraucherkreises angeschlossen sind. Die Ventile 70 steuern die Befüllung und Entleerung eines schematisch gezeigten Balgs 71 des Luftfederungssystems und/oder einer druckluftbetriebenen Liftanlage oder eines sonstigen Verbraucherkreises. Es ist nur ein Balg 71 gezeigt, es können aber auch mehrere sein.

Die Verzweigung 13 ist weiterhin mit einem Prioritätsventil 16 verbunden, das als elektrisch steuerbares Ventil, z.B. als Magnetventil, ausgebildet sein kann, das von einer Steuerelektronik beispielsweise zeitabhängig oder abhängig vom Druck in der Druckleitung 14 zur vorrangigen Versorgung des prioritätsgesteuerten Verbraucherkreises, hier z.B. der Luftfederungssystem oder dessen Liftfeder-Luftbälge 71, gesteuert wird.

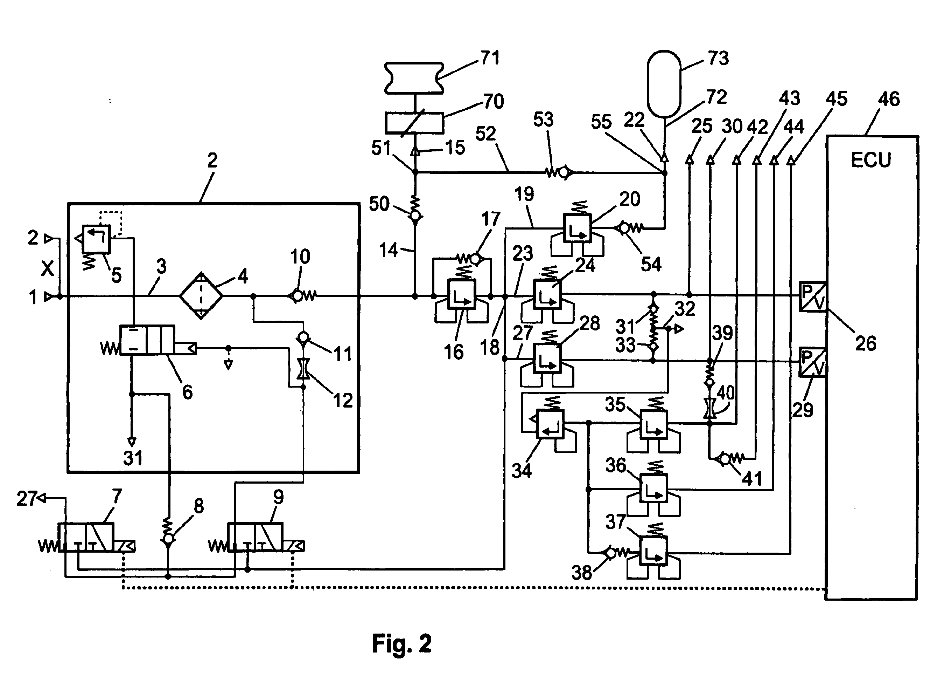

Bei den in den Fig. 1 und 2 gezeigten Ausführungsbeispielen von Prioritätsschaltungen ist das Prioritätsventil 16 als Überströmventil mit optionaler Rückströmung 17 ausgebildet, so dass keine elektrische Steuerung erforderlich ist und der Aufbau der Luftaufbereitungsanlage bei hoher Funktionszuverlässigkeit recht einfach gehalten werden kann.

Das Prioritätsventil 16 ist ausgangsseitig mit einer Verteilerleitung 18 verbunden, von der zu Schutzventilen 20, 24, 28 führende Druckleitungen 19, 23, 27 abzweigen. Die Druckleitung 19 ist über ein Schutzventil 20 mit einem Anschluss 22 verbunden, an den optional der oder die Luftfederungssystem-Druckspeicher-Behälter 73 angeschlossen sind.

Bei diesem Ausführungsbeispiel ist das Schutzventil 20 als Überströmventil ausgeführt, das mit optionaler Rückströmung 21 versehen ist. Alternative kann das Schutzventil 20 auch als elektrisch steuerbares Ventil, z.B. als Magnetventil, ausgebildet sein.

Mit der Verteilerleitung 18 sind weitere Verbraucherkreise beispielsweise für die Betriebsbremse oder Feststellbremse, Fahrerhausfederung, Türsteuerung usw. verbunden. Als Beispiel weist ein Verbraucherkreis 23, der zu einem Verbraucheranschluss 25 führt, ein Schutzventil 24 sowie einen Drucksensor 26 auf. Ebenso weist ein mit einem Verbraucheranschluss 30 verbundener Verbraucherkreis 27 ein Schutzventil 28 sowie einen Drucksensor 29 auf. An die Verbraucheranschlüsse 25 und 30 sind die Betriebsbremskreise angeschlossen. Die Betriebsbremskreise beinhalten jeweils einen oder mehrere nicht dargestellte Behälter. Der Verbraucherkreis 23 ist mittels der Rückschlagventile 31, 33 mit den Verbraucheranschlüssen 25 und 30 verbunden. An den miteinander verbundenen Ausgängen 32 der Rückschlagventile 31, 33 ist ein Druckbegrenzungs-Ventil 34 zur Versorgung von den übrigen Kreisen mit Schutzventilen 35, 36, 37 und Rückschlagventilen 38 und 41 angeschlossen Die Versorgungsleitung 27 ist mit dem das Schutzventil 35 enthaltenden Kreis über ein Rückschlagventil 39 und eine Drossel 40 gekoppelt. Der Anhänger ist an Verbraucheranschluss 42, der Feststellbremskreis an Verbraucheranschluss 43 und Nebenverbraucherkreise sind an Verbraucheranschlüsse 44, 45 angeschlossen, die mit den zu versorgenden Betriebskomponenten verbunden sind.

Eine elektronische Steuereinheit 46 erzeugt elektrische Steuersignale zur Steuerung von elektrisch steuerbaren, die Druckluftströmung und Verteilung steuernden Ventile auf der Grundlage der erfassten Drucksensorwerte und weiterer Betriebsparameter wie Zündstellung, Kupplungsbetätigung. Liftaktivierung, usw.

Die Steuereinheit 46 oder alternativ auch eine andere Elektronikschaltung, vorzugsweise die der elektronischen Luftaufbereitungseinheit, E-APU, sendet Freigabe-Signale an die nicht dargestellte Elektronik der Luftfederung, die die Ventile 70 steuert, und ist damit in der Lage, die Luftentnahme der Luftfederung zu steuern. Mit dem Freigabe-Signal (zum Beispiel kommuniziert über den Fahrzeug CAN-Bus) erlaubt die Steuereinheit 46 der Elektronik der Luftfederung Druckluft zu verbrauchen. Dies Signal kann zum Beispiel abhängig sein von den in der Betriebsbremse vorhandenen Drücken, gemessen mit den Drucksensoren 26 und 29.

Wie aus Fig. 1 ersichtlich ist, ist der Eingang des Schutzventils 20 nicht direkt mit dem Ausgang des Lufttrockners 4 und des Rückschlagventils 10 verbunden. Vielmehr geht von der zwischen dem Ausgang des Lufttrockners 4 und dem Schutzventil 20 liegenden Verzweigung 13 ein Zweig direkt (das heißt ohne Schutzventil in der Leitung 14) zu dem mindestens einen Luftfederungsventil, ECAS-Ventil 70, das am Anschluss 15 angeschlossen ist. In dem zweiten Zweig der Verzweigung 13 ist das als Überströmventil ausgebildete Prioritätsventil 16 angeordnet, dessen Ausgang mit dem Eingang des Schutzventils 20 verbunden ist.

Das Prioritätsventil 16 weist optional einen im Vergleich zu den Öffnungsdrücken der Schutzventile 20, 24, 28 und im Vergleich zum Abschaltdruck des nicht gezeigten Druckreglers relativ hohen bis sehr hohen Öffnungsdruck auf. Damit ist der an den Eingang 1 angeschlossene Kompressor in der Lage, den oder die mit dem Anschluss 15 verbundenen Luftfederbälge 71 sehr rasch auf einen sehr hohen Druck zu bringen. Dies ist zum Beispiel beim Auffüllen der leeren Druckluftanlage des Fahrzeuges von Vorteil. Der Kompressor füllt zunächst die Verzweigung 13 mit Druckluft. Wenn das oder die Ventile 70 geöffnet sind, werden auch der oder die Bälge 71 der Luftfederungssystems gefüllt. Das Prioritätsventil 16 sperrt den Weg zur Verteilerleitung 18. Wenn der gewünschte Balgdruck erreicht ist, werden die Ventile 70 geschlossen. Dadurch werden der oder die Bälge 71 sehr schnell aufgefüllt, da der Kompressor nur die Bälge 71 auffüllt, nicht aber die übrigen Verbraucherkreise 25, 30, 42, 43, 44, 45 und auch nicht der oder die Luftfederungssystem-Druckspeicher-Behälter 73. Ein weiterer Effekt ist, dass die Fahrzeugfederung als erstes System betriebsbereit ist. Nachdem die Ventile 70 geschlossen haben, steigt der Druck in der Verzweigung 13 weiter bis das Prioritätsventil 16 öffnet und die Verteilerleitung und weiter die anderen Verbraucherkreise gefüllt werden.

Es ist auch denkbar, dass, über das Freigabesignal gesteuert, das oder die Ventile 70 beim Auffüllen der leeren Druckluftanlage des Fahrzeuges zunächst geschlossen bleiben. In dem Falle steigt der Druck in der Verzweigung 13 sofort an und öffnet das Prioritätsventil 16 beim Erreichen von dessen Öffnungsdruck. Die Verteilerleitung 18 wird nun befüllt. Nun öffnen beispielsweise die Überströmventile 24 und 28, so dass die Behälter der Betriebsbremskreise als erstes befüllt werden. Ist der Druck in den Betriebsbremskreisen, gemessen mit den Drucksensoren 26 und 29, hoch genug um eine gewisse Betriebsbremswirkung sicherzustellen, sendet die elektronische Steuereinheit 46 das Freigabesignal und erlaubt damit der Elektronik der Luftfederung die Ventile 70 zu öffnen um die Bälge 71 zu befüllen. Dabei bricht der Druck in der Verzweigung 13 zusammen, sodass das Prioritätsventil 16 schließt. Jetzt fördert der Kompressor wieder nur in die Bälge 71 und füllt diese schnell auf. Auf diese Weise wird eine Vorrangigkeit der Betriebsbremsbereitschaft vor der Bereitschaft der Fahrzeugfederung erzielt. Nachdem die Bälge 71 aufgefüllt worden sind und die Ventile 70 geschlossen haben, steigt der Druck in der Verzweigung 13 weiter bis das Prioritätsventil 16 öffnet und die anderen Verbraucherkreise 25, 30, 42, 43, 44, 45 und auch der oder die Luftfederungssystem-Druckspeicher-Behälter 73 werden weiter aufgefüllt. Wenn alle Bälge und Verbraucherkreise aufgefüllt sind wird der Kompressor abgeschaltet.

Bei aufgefüllter Druckluftanlage des Fahrzeugs erlaubt die optionale Rückströmung 17 des Prioritätsventils 16 das erste rasche Füllen des oder der am Anschluss 15 angeschlossenen Bälge 71 aus dem oder den am Schutzventil 20 und dem Anschluss 22 angeschlossenen Behältern und auch aus den an den Schutzventilen 24 und 28 und den Verbraucheranschlüssen 25 und 30 (Betriebsbremskreise) angeschlossen, nicht dargestellten Behälter, bis das Rückschlagventil der Rückströmung 17 schließt (Druckausgleich). Ist der Druck beim Druckausgleich sehr gering, kann es sein, dass vorher die Schutzventile 24 und 28 (Betriebsbremskreise) schließen, so dass eine gewisse Bremswirkung sichergestellt bleibt. Nach dem Schließen des Rückschlagventiles 17 füllt nur noch der Kompressor den oder die Bälge 71 direkt über die Leitung 14. Dies geschieht, ohne dass weitere Behälter gleichzeitig mit aufgefüllt werden, da das Prioritätsventil 16 einschließlich des Rückschlagventiles 17 geschlossen sind. Dadurch wird eine schnelle Befüllung der Bälge 71 gewährleistet. Nachdem die Bälge 71 aufgefüllt worden sind und die Ventile 70 geschlossen haben, steigt der Druck in der Verzweigung 13 weiter bis das Prioritätsventil 16 öffnet und die anderen Verbraucherkreise werden weiter aufgefüllt. Wenn alle Bälge und Verbraucherkreise aufgefüllt sind, wird der Kompressor abgeschaltet. Es ist ersichtlich, dass für die Sperrung der anderen Verbraucherkreise 25, 30, 42, 43, 44, 45 und auch des oder der Luftfederungssystem-Druckspeicher-Behätter 73 der Öffnungsdruck des Prioritätsventils 16 höher sein muss als der maximale Arbeitsdruck in der Leitung 14, als der maximale Balgdruck.

Das Prioritätsventil (Überströmventil) 16 weist optional keine, nur eine kleine, oder sogar eine negative Hysterese auf. Hysterese bedeutet hier der Unterschied von Öffnungs- zu Schließdruck. Häufig ist der Schließdruck (z.B. 15%) kleiner als der Öffnungsdruck. Dies führt dazu, dass, wenn schon Druck in der vorhanden ist, das Überströmventil schon vor dem eigentlichen Öffnungsdruck öffnet. Dieser Druck in der Verteilerleitung 18 bzw. in der Leitung 19 hat nämlich eine Wirkfläche im Ventil. Nur bei druckloser Verteilerleitung 18 bzw. Leitung 19 öffnet das Überströmventil beim eigentlichen Öffnungsdruck. Um diese Abhängigkeit von dem Druck auf der Ausgangsseite des Prioritätsventil so klein wie möglich zu halten, sollte die Hysterese sehr klein, bzw. null oder gar leicht negativ sein. Negative Hysterese bedeutet, dass der Schließdruck größer ist als der Öffnungsdruck. Hierdurch wird verhindert, dass das Prioritätsventil 16 frühzeitig öffnet und die an das Schutzventil 20 oder die anderen Schutzventile angeschlossenen Behälter zeitaufwändig mit aufgefüllt werden.

Wie aus Fig. 1 ersichtlich ist, ist das Schutzventil 20 optional ebenfalls als (zweites) Überströmventil mit Rückströmung 21 ausgebildet, welches mit den der Luftfederung zugeordneten Behältern am Anschluss 22 verbunden ist.
Dieses Überströmventil 20 erlaubt die Priorität beim Befüllen der der Luftfederung zugeordneten Behälter, sofern vorhanden.

Wenn der Öffnungsdruck des Überströmventils 20 höher ist als der Öffnungsdruck des oder der anderen für die Betriebsbremse vorgesehenen Überströmventile (z.B. 24), werden die Bremsbehälter vor den Luftfederbehältern gefüllt. Sofern eine solche Priorität nicht erforderlich ist, kann dieses Ventil 20 auch weggelassen werden. Sofern das Ventil 20 vorhanden ist, kann eine kleine, keine oder negative Hysterese des Ventils 20 verhindern, dass das Ventil 20 frühzeitig öffnet und die Luftfederbehälter zeitgleich mit den Bremsbehältern aufgefüllt würden. Hierdurch wird die volle Bremskraft relativ rasch erreicht. Andernfalls, ohne Ventil 20, oder ohne kleine, keine oder negative Hysterese, würde die volle Bremskraft erst später zur Verfügung stehen.

Die aus Fig. 1 ersichtliche optionale Rückströmung 21 des Schutzventils 20 ermöglicht gemeinsam mit der optionalen Rückströmung 17 des Prioritätsventils 16 das erste rasche Füllen des oder der am Anschluss 15 angeschlossenen Bälge 71 aus dem oder den am Schutzventil 20 und dem Anschluss 22 angeschlossenen Behältern (Druckausgleich), und zwar solange, bis das Rückschlagventil der Rückströmung 21 oder 17 schließt.

In Fig. 2 ist ein weiteres Ausführungsbeispiel eines erfindungsgemäßen Verbraucherkreises in Form eines Luftfederungssystems gezeigt.

Das Ausführungsbeispiel nach Fig. 2 unterscheidet sich vom Ausführungsbeispiel gemäß Fig. 1 unter anderem dadurch, dass in die Leitung 14 zwischen der Verzweigung 13 und dem mit den Luftfederungsventilen 70 verbundenen Anschluss 15 ein Ventil 50, beispielsweise ein Rückschlagventil, eingefügt ist, das eine Strömung nur in der Richtung von der Verzweigung 13 zum Anschluss 15 zulässt, in Gegenrichtung aber sperrt. Weiterhin ist eine Verbindungsleitung 52 vorhanden, die die Anschlüsse 15 und 22 fluidmäßig miteinander verbindet und an einer zwischen dem Ventil 50 und dem Anschluss 15 liegenden Verzweigung 51 mit der Leitung 14 verbunden ist. Darüber hinaus ist die Verbindungsleitung 52 mit der zum Anschluss 22 führenden Leitung an einer zwischen dem Ventil 20 und dem Anschluss 22 liegenden Verzweigung 55 verbunden. In der Verbindungsleitung 52 ist ein Ventil 53, z.B. in Form eines Rückschlagventils, vorhanden, das eine Fluidströmung nur vom Anschluss 22 zum Anschluss 15 zulässt.

Das Schutzventil 20 ist bei dem Ausführungsbeispiel gemäß Fig. 2 ohne Rückströmung ausgebildet. Zwischen dem Ausgang des Schutzventils 20 und dem Anschluss 55 ist ein Ventil 54, beispielsweise ein Rückschlagventil, eingefügt, das eine Strömung nur in der Richtung von dem Schutzventil 20 zum Anschluss 55 und 22 zulässt, in Gegenrichtung aber sperrt.

Im übrigen stimmen die Ausführungsbeispiele der Fig. 1 und 2 weitgehend überein, so dass hinsichtlich der weiteren in Fig. 2 gezeigten Komponenten auf die vorstehenden Erläuterungen zu den entsprechenden Bezugszeichen der Fig. 1 verwiesen wird.

Das Ausführungsbeispiel gemäß Fig. 2 erlaubt eine noch raschere anfängliche Füllung des oder der Luftfederbälge am Anschluss 15 aus dem Behälter am Anschluss 22, da aufgrund des nur einen Ventils 53 im direkten Strömungspfad zwischen den Anschlüssen 15, 22 nur geringer Strömungswiderstand zwischen diesen Anschlüssen vorhanden ist.

Das Ausführungsbeispiel gemäß Fig. 2 hat den Vorteil, dass zu Beginn des Hebevorganges die Luftfederbehälter 73 maximalen Druck haben und damit für diese Hebeoperation die maximale Druckluftmenge in den Behältern zur Verfügung steht. Die Behälter der Luftfederung behalten beim Ausführungsbeispiel gemäß Fig. 2 wegen des Rückschlagventils 54 den maximalen Druck der sich im normalen Betrieb in der Verteilerleitung 18 aufgebaut hat. Andernfalls (z.B. Ausführungsbeispiel gemäß Fig.1) würde lediglich der aktuelle Druck der Verteilerleitung 18 den Luftfederbehältern 73 zur Verfügung stehen. Der aktuelle Druck schwankt im normalen Betrieb und bewegt sich zwischen Einschalt- und Abschaltdruck des Kompressors. Ein weiterer Vorteil von Fig. 2 ist, dass die Druckluftmenge in den Luftfederbehältern 73 nur der Luftfederung zur Verfügung steht.

Die Schaltung ist bei den Ausführungsbeispielen der Erfindung aufgrund der Kommunikation mit dem elektronisch gesteuerten Luftfederungssystem (ECAS) flexibel, und zudem sehr kostengünstig. Z.B. ist für das Prioritätsventil 16 kein Magnetventil erforderlich, was den technischen Aufwand verringert und die Zuverlässigkeit noch weiter erhöht.

Neben den Vorteilen bei den Hebeoperationen gibt es zum Beispiel auch die Möglichkeit der smarten Steuerung der Auffüllreihenfolge der Verbraucherkreise, z.B. für einen schnellen Fahrzeug-Start. Hierzu können die mit den einzelnen Verbraucherkreisen verbundenen Magnetventile entsprechend geöffnet und gesperrt werden.

Für einen raschen Fahrzeug-Start kann z.B. zuerst ein Auffüllen der Bremsbehälter erfolgen, bis die Warnlampe erlischt und die Federspeicher gelöst werden können.

Jetzt kann das Fahrzeug bei Bedarf schon losfahren. Nun kann sich - wie oben beschrieben - ein Auffüllen der Luftfederbälge bis auf Normalniveau anschließen. Jetzt hat das Fahrzeug die volle Federung. Danach kann ein Auffüllen der Bremsbehälter bis auf den Öffnungsdruck des Überströmventils 20 erfolgen, wonach das Auffüllen der Luftfederbehälter und dann das Auffüllen aller Behälter bis auf Abschaltdruck vorgenommen werden kann. Der Öffnungsdruck des Überströmventils 20 muss hierfür größer als der Öffnungsdruck der Überströmventile 24 und 28 sein.

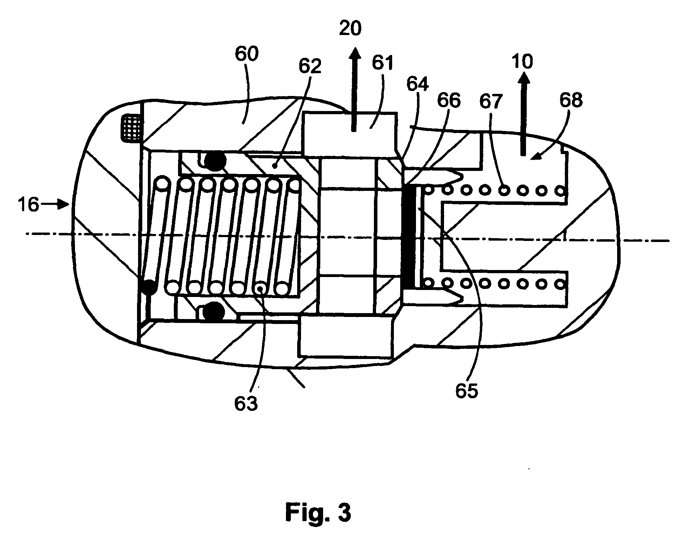

In Fig. 3 ist ein Ausführungsbeispiel des Prioritätsventils 16 in Form eines Überströmventils mit Rückströmung 17 gezeigt. Das Überströmventil 16 weist ein Ventilgehäuse 60 auf, das einen mit der Verteilerleitung 18 verbindbaren Fluidanschluss 61 und einen Ventilkörper 62 umfasst, der durch eine Feder 63 auf einen Ventilsitz 64 vorgespannt wird. Das Überströmventil 16 enthält weiterhin einen mit der Druckleitung 14 und dem Ventil 10 verbindbaren Fluidanschluss 68 und ein Ventilelement 65, das durch eine Feder 67 auf einen auf dem Ventilkörper 62 befindlichen Ventilsitz 66 vorgespannt wird und als Rückschlagventil wirkt.

Wenn der Fluiddruck am Anschluss 68 und die Federkraft der Feder 67 die durch die Feder 63 ausgeübte Kraft überwinden, hebt der Ventilkörper 62 vom Ventilsitz 64 ab, so dass die Anschlüsse 61, 68 fluidmäßig miteinander verbunden werden. Wenn andererseits der Fluiddruck am Anschluss 61 die durch die Feder 67 ausgeübte Kraft überwindet, hebt das Ventilelement 65 vom Ventilsitz 66 ab, so dass die Anschlüsse 61, 68 fluidmäßig miteinander gekoppelt sind und eine Rückströmung ermöglicht ist.

Das Luftfederungssystem kann als Hochdruckkreis ausgebildet sein, da die Luftfederungsanlage und die Luftfederbälge in der Regel viel Volumen und relativ hohe Drücke aufweisen.

Die vorstehend beschriebenen Ausgestaltungen lassen sich auch bei anderen Verbrauchern und Verbraucherkreisen wie beispielsweise zur Türsteuerung, Fahrerhaussteuerung usw. einsetzen.

Wie vorstehend beschrieben, weist das Druckluftversorgungssystem für einen ersten Druckluftverbraucherkreis, insbesondere für ein Luftfederungssystem für ein Fahrzeug wie etwa ein Nutzfahrzeug, gemäss einer oder mehreren Ausführungsformen eine zu dem ersten Druckluftverbraucherkreis führende erste Druckluftleitung und eine zu weiteren Verbraucherkreisen führende Verteilerleitung auf. Eine Prioritätsventilanordnung ist zwischen der zum Druckluftverbraucherkreis führenden ersten Druckluftleitung und der zu den weiteren Verbraucherkreisen führenden Verteilerleitung angeordnet, wobei die erste Druckluftleitung kein Schutzventil aufweist. Damit lassen sich z.B. Luftfederungsvorgänge wie etwa Lift- oder Hebeaktivitäten mit Priorität sehr rasch durchführen.

Ein erstes Rückschlagventil kann zwischen dem Ausgang eines Lufttrockners (4) einerseits und der ersten Druckluftleitung sowie einem Eingang der Prioritätsventilanordnung andererseits angeordnet sein, um Druckverluste zu vermeiden, wobei die erste. Druckluftleitung zu mindestens einem Steuerventil des ersten Druckluftverbraucherkreises führen kann..

Die Prioritätsventilanordnung kann als Überströmventil vorzugsweise mit Rückströmung ausgebildet sein, so dass keine elektrische Steuerung erforderlich ist.

Die Prioritätsventilanordnung besitzt vorzugsweise keine Hysterese oder nur eine geringe oder negative Hysterese, und kann vorteilhafterweise einen im Vergleich zum Arbeitsdruck des ersten Druckluftverbraucherkreises höheren Öffnungsdruck aufweisen.

In vorteilhafter Ausgestaltung kann zumindest ein zum ersten Druckluftverbraucherkreis gehörender erster Luftbehälter über eine zweite Druckluftleitung an die Verteilerleitung anschlossen sein, wobei die zweite Druckluftleitung ein Schutzventil enthalten kann. Das Schutzventil kann als Magnetventil oder vorzugsweise als Überströmventil, insbesondere mit Rückströmung, ausgebildet sein, das mit mindestens einem Druckluftverbraucherkreis-Luftbehälter verbunden ist, und ähnlich wie das Prioritätsventil keine Hysterese oder nur eine geringe oder eine negative Hysterese aufweisen kann.

In vorteilhafter Ausgestaltung kann eine Verbindungsleitung zwischen der ersten Druckleitung und der zu dem erstem Luftbehälter führenden zweiten Druckluftleitung vorgesehen sein, so dass eine direkte Fluidkopplung erreichbar ist. In dieser Verbindungsleitung kann ein Ventil, z.B. ein Magnetventil oder ein keine elektrische Steuerung benötigendes Rückschlagventil angeordnet sein, so dass unerwünschte Rückströmungen verhindert werden.

Ferner kann ein Rückschlagventil (50) zwischen dem Eingang der Prioritätsventilanordnung (16) und mindestens einem, zum ersten Druckluftverbraucherkreis gehörenden Steuerventil (70) zur Definition der zulässigen Strömungsrichtung vorhanden sein. Ebenso kann zwischen dem Schutzventil (20) und der zu dem mindestens einen zum ersten Druckluftverbraucherkreis gehörender ersten Luftbehälter (73) führenden zweiten Druckleitung (19, 72) ein Rückschlagventil (54) angeordnet sein.

In vorteilhafter Ausgestaltung kann die Prioritätsventilanordnung (16) als Überströmventil ausgebildet sein, das einen mit Verteilerleitung verbindbaren Fluidanschluss, der durch einen Ventilkörper verschließbar ist, einen mit der ersten Druckluftleitung verbindbaren Fluidanschluss und ein Ventilelement aufweist, das als Rückschlagventil wirkt. Der Ventilkörper kann zugleich auch den Ventilsitz für das Ventilelement bilden.

Im Rahmen der Erfindung liegt auch allgemein eine Luftaufbereitungsanlage, insbesondere für Fahrzeuge, die ein Druckluftversorgungssystem, insbesondere Luftfederungssystem, gemäß den vorstehenden Ausführungen aufweist.

In einer Ausgestaltung ist ein Verfahren zur Steuerung eines Druckluftversorgungssystems für einen ersten Druckluftverbraucherkreis, insbesondere für ein Luftfederungssystem bereitgestellt, bei dem zunächst der erste Druckluftverbraucherkreis gespeist wird und erst nach Verstreichen einer vorbestimmten Zeitdauer oder Erreichen eines vorgegebenen Drucks im ersten Druckluftverbraucherkreis zumindest ein zum ersten Druckluftverbraucherkreis gehörender Luftbehälter des Druckluftverbraucherkreises über eine Prioritätsventilanordnung aufgefüllt wird.

Für einen raschen Fahrzeug-Start kann gemäß einem oder mehreren Ausführungsbeispielen zuerst ein teilweises Auffüllen von Bremsbehältern erfolgen, danach der erste Druckluftverbraucherkreis, dann die Bremsbehälter weiter bis auf den Öffnungsdruck eines als Überströmventil ausgebildeten Schutzventils gefüllt werden, und anschließend der zum ersten Druckluftverbraucherkreis gehörende Luftbehälter und weitere Luftbehälter bis auf Abschaltdruck gefüllt werden.

Gemäß einem oder mehreren Ausführungsbeispielen ist somit bei dem Druckluftversorgungssystem, insbesondere für eine Luftfederungssystem für ein Fahrzeug, eine Prioritätsventilanordnung zwischen einer zu einem Druckluftverbrauchersystem führenden ersten Druckluftleitung und einer zu einem Schutzventil oder Luftbehälter führenden zweiten Druckluftleitung sowie einer Verteilerleitung angeordnet. Das Druckluftverbrauchersystem kann mit Vorrang aufgefüllt werden und rasch Betriebsbereitschaft erreichen.

## Patentansprüche

1. Druckluftversorgungssystem für einen ersten Druckluftverbraucherkreis, insbesondere für ein Luftfederungssystem für ein Fahrzeug, das eine zu dem ersten Druckluftverbraucherkreis (70, 71) führende erste Druckluftleitung (14) und eine zu weiteren Verbraucherkreisen (25, 30, 42, 43, 44, 45) führende Verteilerleitung (18) aufweist, mit einer Prioritätsventilanordnung (16), die zwischen der zum Druckluftverbraucherkreis führenden ersten Druckluftleitung (14) und der zu den weiteren Verbraucherkreisen 25, 30, 42, 43, 44, 45 führenden Verteilerleitung (18) angeordnet ist, wobei die erste Druckluftleitung (14) kein Schutzventil aufweist,
**dadurch gekennzeichnet, dass** ein erstes Rückschlagventil (10) zwischen dem Ausgang eines Lufttrockners (4) einerseits und der ersten Druckluftleitung (14) sowie einem Eingang der Prioritätsventilanordnung (16) andererseits angeordnet ist, und die erste Druckluftleitung (14) zu mindestens einem Steuerventil (70) des ersten Druckluftverbraucherkreises führt.

2. Druckluftversorgungssystem nach Anspruch 1, **dadurch gekennzeichnet, dass** die Prioritätsventilanordnung (16) als Überströmventil ausgebildet ist.

3. Druckluftversorgungssystem nach Anspruch 2, **dadurch gekennzeichnet, dass** die Prioritätsventilanordnung (16) als Überströmventil mit Rückströmung (17) ausgebildet ist.

4. Druckluftversorgungssystem nach einem der vorhergehenden Ansprüche, **dadurch gekennzeichnet, dass** die Prioritätsventilanordnung (16) keine Hysterese oder nur eine geringe oder negative Hysterese aufweist.

5. Druckluftversorgungssystem nach einem der vorhergehenden Ansprüche, **dadurch gekennzeichnet, dass** die Prioritätsventilanordnung (16) einen im Vergleich zum Arbeitsdruck des ersten Druckluftverbraucherkreises höheren Öffnungsdruck aufweist.

6. Druckluftversorgungssystem nach einem der vorhergehenden Ansprüche, **dadurch gekennzeichnet, dass** zumindest ein zum ersten Druckluftverbraucherkreis (70, 71) gehörender erster Luftbehälter (73) über eine zweite Druckluftleitung (19,72) an die Verteilerleitung (18) anschlossen sind.

7. Druckluftversorgungssystem nach Anspruch 6, **dadurch gekennzeichnet, dass** die zweite Druckluftleitung (19, 72) ein Schutzventil (20) enthält.

8. Druckluftversorgungssystem nach Anspruch 7, **dadurch gekennzeichnet, dass** das Schutzventil (20) ein Überströmventil aufweist.

9. Druckluftversorgungssystem nach einem der vorhergehenden Ansprüche 7 oder 8, **dadurch gekennzeichnet, dass** das Schutzventil (20) ein Überströmventil mit Rückströmung (21) aufweist.

10. Druckluftversorgungssystem nach Anspruch 8 oder 9, **dadurch gekennzeichnet, dass** das Überströmventil des Schutzventils (20) keine Hysterese oder nur eine geringe oder eine negative Hysterese aufweist.

11. Druckluftversorgungssystem nach einem der vorhergehenden Ansprüche, **gekennzeichnet durch** eine Verbindungsleitung (52) zwischen der ersten Druckluftleitung (14) und einer zu zumindest einem ersten Luftbehälter (73) führenden zweiten Druckluftleitung (19, 72).

12. Druckluftversorgungssystem nach Anspruch 11, **gekennzeichnet durch** ein Rückschlagventil (53) in der Verbindungsleitung (52) zwischen der ersten (14) und der zweiten Druckleitung (19, 72).

13. Druckluftversorgungssystem nach Anspruch 7 , **gekennzeichnet durch** ein Rückschlagventil (50) zwischen dem Eingang der Prioritätsventilanordnung (16) und mindestens einem Steuerventil (70) des ersten Drucktuftverbraucherkreises.

14. Druckluftversorgungssystem nach einem der Ansprüche 7 bis 13, **dadurch gekennzeichnet, dass** zwischen dem Schutzventil (20) und einer zu mindestens einen ersten Luftbehälter (73) führenden zweiten Druckluftleitung (19, 72) ein Rückschlagventil (54) angeordnet ist.

15. Druckluftversorgungssystem nach einem der vorhergehenden Ansprüche, **dadurch gekennzeichnet, dass** die Prioritätsventilanordnung (16) als Überströmventil ausgebildet ist, das einen mit Verteilerleitung (18) verbindbaren Fluidanschluss (61), der durch einen Ventilkörper (62) verschließbar ist, einen mit der ersten Druckluftleitung (14) verbindbaren Fluidanschluss (68) und ein Ventilelement (65) aufweist, das als Rückschlagventil wirkt.

16. Druckluftversorgungssystem nach Anspruch 15, **dadurch gekennzeichnet, dass** der Ventilkörper (62) auch den Ventilsitz (66) für das Ventilelement (65) bildet.

17. Luftaufbereitungsanlage, insbesondere für Fahrzeuge, **gekennzeichnet durch** ein Druckluftversorgungssystem, insbesondere Luftfederungssystem, gemäß einem der vorhergehenden Ansprüche.

18. Verfahren zur Steuerung eines Druckluftversorgungssystem nach Anspruch 1 für einen ersten Druckluftverbraucherkreis (70, 71), insbesondere für ein Luftfederungssystems, bei dem zunächst der erste Druckluftverbraucherkreis (70, 71) gespeist wird und erst nach Verstreichen einer vorbestimmten Zeitdauer oder Erreichen eines vorgegebenen Drucks im Druckluftverbraucherkreis (70, 71) zumindest ein zum ersten Druckluftverbraucherkreis (70, 71) gehörender Luftbehälter (73) des Druckluftverbraucherkreises über eine Prioritätsventilanordnung (16) aufgefüllt wird.

19. Verfahren nach Anspruch 18, bei dem für einen raschen Fahrzeug-Start zuerst ein teilweises Auffüllen von Bremsbehältern erfolgt, danach der erste Druckluftverbraucherkreis (70, 71), dann die Bremsbehälter weiter bis auf den Öffnungsdruck eines als Überströmventil ausgebildeten Schutzventils (20) gefüllt werden, und anschließend der zum ersten Druckluftverbraucherkreis (70, 71) gehörende Luftbehälter (73) und weitere Luftbehälter bis auf Abschaltdruck gefüllt werden.

## Claims

1. Compressed air supply system for a first compressed air consumer circuit, in particular for an air suspension system for a vehicle, which has a first compressed air line (14) leading to the first compressed air consumer circuit (70, 71) and a distributor line (18) leading to further consumer circuits (25, 30, 42, 43, 44, 45), having a priority valve arrangement (16) which is arranged between the first compressed air line (14) leading to the compressed air consumer circuit and the distributor line (18) leading to the further consumer circuits (25, 30, 42, 43, 44, 45), when the first compressed air line (14) does not have a protection valve, **characterized in that** a first nonreturn valve (10) is arranged between the outlet of an air dryer (4), on the one hand, and the first compressed air line (14) and an inlet of the priority valve arrangement (16), on the other, and the first compressed air line (14) leads to at least one control valve (70) of the first compressed air consumer circuit.

2. Compressed air supply system according to Claim 1, **characterized in that** the priority valve arrangement (16) is embodied as an overflow valve.

3. Compressed air supply system according to Claim 2, **characterized in that** the priority valve arrangement (16) is embodied as an overflow valve with feedback means (17).

4. Compressed air supply system according to one of the preceding claims, **characterized in that** the priority valve arrangement (16) does not have a hysteresis or only has a small or a negative hysteresis.

5. Compressed air supply system according to one of the preceding claims, **characterized in that** the priority valve arrangement (16) has a relatively high opening pressure compared to the working pressure of the first compressed air consumer circuit.

6. Compressed air supply system according to one of the preceding claims, **characterized in that** at least one first air container (73), which is associated with the first compressed air consumer circuit (70, 71), are connected to the distributor line (18) via a second compressed air line (19, 72).

7. Compressed air supply system according to Claim 6, **characterized in that** the second compressed air line (19, 72) contains a protection valve (20).

8. Compressed air supply system according to Claim 7, **characterized in that** the protection valve (20) has an overflow valve.

9. Compressed air supply system according to one of the preceding Claims 7 and 8, **characterized in that** the protection valve (20) has an overflow valve with a feedback means (21).

10. Compressed air supply system according to Claim 8 or 9, **characterized in that** the overflow valve of the protection valve (20) does not have a hysteresis or has only a small or a negative hysteresis.

11. Compressed air supply system according to one of the preceding claims, **characterized by** a connecting line (52) between the first compressed air line (14) and a second compressed air line (19, 72) leading to at least a first air container (73).

12. Compressed air supply system according to Claim 11, **characterized by** a nonreturn valve (53) in the connecting line (52) between the first pressure line (14) and the second pressure line (19, 72).

13. Compressed air supply system according to claim 7, **characterized by** a nonreturn valve (50) between the inlet of the priority valve arrangement (16) and at least one control valve (70) of the first compressed air consumer circuit.

14. Compressed air supply system according to one of Claims 7 to 13, **characterized in that** a nonreturn valve (54) is arranged between the protection valve (20) and a second compressed air line (19, 72) leading to at least a first air container (73).

15. Compressed air system according to one of the preceding claims, **characterized in that** the priority valve arrangement (16) is embodied as an overflow valve which has a fluid connection (61) which can be connected to the distributor line (18) and can be closed by a valve body (62), a fluid connection (68) which can be connected to the first compressed air line (14), and a valve element (65) which acts as a nonreturn valve.

16. Compressed air supply system according to Claim 15, **characterized in that** the valve body (62) also forms the valve seat (66) for the valve element (65).

17. Air conditioning system, in particular for vehicles, **characterized by** a compressed air supply system, in particular air suspension system, according to one of the preceding claims.

18. Method for controlling a compressed air supply system according to Claim 1, for a first compressed air consumer circuit (70, 71), in particular for an air suspension system, in which firstly the first compressed air consumer circuit (70, 71) is fed, and an air container (73), belonging to the first compressed air consumer circuit (70, 71), of the compressed air consumer circuit is not filled via a priority valve arrangement (16) until after a predetermined time period has passed or a predefined pressure has been attained in the compressed air consumer circuit (70, 71).

19. Method according to Claim 18, in which for a rapid start of the vehicle first a partial filling of brake containers takes place, afterwards the first compressed air consumer circuit (70, 71) and then the brake containers are filled further up to the opening pressure of a protection valve (20) which is embodied as an overflow valve, and subsequently the air container (73), belonging to the first compressed air consumer circuit (70, 71), and further air containers are filled up to the switch off pressure.

## Revendications

1. Système d'alimentation en air comprimé pour un premier circuit consommateur d'air comprimé, en particulier pour un système de suspension pneumatique d'un véhicule, qui présente une première conduite d'air comprimé (14) conduisant au premier circuit consommateur d'air comprimé (70, 71) et une conduite de distribution (18) conduisant à d'autres circuits consommateurs (25, 30, 42, 43, 44, 45), avec un agencement de soupape prioritaire (16), qui est disposé entre la première conduite d'air comprimé (14) conduisant au circuit consommateur d'air comprimé et la conduite de distribution (18) conduisant aux autres circuits consommateurs (25, 30, 42, 43, 44, 45), la première conduite d'air comprimé (14) ne présentant pas de soupape de protection, **caractérisé en ce qu'**un premier clapet anti-retour (10) est disposé entre la sortie d'un sécheur d'air (4) d'une part et la première conduite d'air comprimé (14) ainsi qu'une entrée de l'agencement de soupape prioritaire (16) d'autre part, et la première conduite d'air comprimé (14) conduit à au moins une soupape de commande (70) du premier circuit consommateur d'air comprimé.

2. Système d'alimentation en air comprimé selon la revendication 1, **caractérisé en ce que** l'agencement de soupape prioritaire (16) est réalisé sous forme de soupape de débordement.

3. Système d'alimentation en air comprimé selon la revendication 2, **caractérisé en ce que** l'agencement de soupape prioritaire (16) est réalisé sous forme de soupape de débordement avec un écoulement de retour (17).

4. Système d'alimentation en air comprimé selon l'une quelconque des revendications précédentes, **caractérisé en ce que** l'agencement de soupape prioritaire (16) ne présente pas d'hystérésis ou seulement une hystérésis faible ou négative.

5. Système d'alimentation en air comprimé selon l'une quelconque des revendications précédentes, **caractérisé en ce que** l'agencement de soupape prioritaire (16) présente une pression d'ouverture plus élevée par comparaison avec la pression de travail du premier circuit consommateur d'air comprimé.

6. Système d'alimentation en air comprimé selon l'une quelconque des revendications précédentes, **caractérisé en ce qu'**au moins un premier réservoir d'air (73) appartenant au premier circuit consommateur d'air comprimé (70, 71) est raccordé par le biais d'une deuxième conduite d'air comprimé (19, 72) à la conduite de distribution (18).

7. Système d'alimentation en air comprimé selon la revendication 6, **caractérisé en ce que** la deuxième conduite d'air comprimé (19, 72) contient une soupape de protection (20).

8. Système d'alimentation en air comprimé selon la revendication 7, **caractérisé en ce que** la soupape de protection (20) présente une soupape de débordement.

9. Système d'alimentation en air comprimé selon l'une quelconque des revendications précédentes 7 ou 8, **caractérisé en ce que** la soupape de protection (20) présente une soupape de débordement avec un écoulement de retour (21).

10. Système d'alimentation en air comprimé selon la revendication 8 ou 9, **caractérisé en ce que** la soupape de débordement de la soupape de protection (20) ne présente aucune hystérésis ou seulement une hystérésis faible ou négative.

11. Système d'alimentation en air comprimé selon l'une quelconque des revendications précédentes, **caractérisé par** une conduite de liaison (52) entre la première conduite d'air comprimé (14) et une deuxième conduite d'air comprimé (19, 72) conduisant à au moins un premier réservoir d'air (73).

12. Système d'alimentation en air comprimé selon la revendication 11, **caractérisé par** un clapet anti-retour (53) dans la conduite de liaison (52) entre la première (14) et la deuxième (19, 72) conduite d'air comprimé.

13. Système d'alimentation en air comprimé selon la revendication 7, **caractérisé par** un clapet anti-retour (50) entre l'entrée de l'agencement de soupape prioritaire (16) et au moins une soupape de commande (70) du premier circuit consommateur d'air comprimé.

14. Système d'alimentation en air comprimé selon l'une quelconque des revendications 7 à 13, **caractérisé en ce qu'**entre la soupape de protection (20) et une deuxième conduite d'air comprimé (19, 72) conduisant à au moins un premier réservoir d'air (73) est disposé un clapet anti-retour (54).

15. Système d'alimentation en air comprimé selon l'une quelconque des revendications précédentes, **caractérisé en ce que** l'agencement de soupape prioritaire (16) est réalisé sous forme de soupape de débordement, qui présente un raccordement de fluide (61) pouvant être connecté à la conduite de distribution (18), lequel raccord de fluide peut être fermé par un corps de soupape (62), un raccord de fluide (68) pouvant être connecté à la première conduite d'air comprimé (14) et un élément de soupape (65) qui agit en tant que clapet anti-retour.

16. Système d'alimentation en air comprimé selon la revendication 15, **caractérisé en ce que** le corps de soupape (62) forme également le siège de soupape (66) pour l'élément de soupape (65).

17. Installation de traitement d'air, en particulier pour des véhicules, **caractérisée par** un système d'alimentation en air comprimé, en particulier un système de suspension pneumatique, selon l'une quelconque des revendications précédentes.

18. Procédé de commande d'un système d'alimentation en air comprimé selon la revendication 1, pour un premier circuit consommateur d'air comprimé (70, 71), en particulier pour un système de suspension pneumatique, dans lequel le premier circuit consommateur d'air comprimé (70, 71) est d'abord alimenté et seulement après l'écoulement d'une durée prédéterminée ou après l'obtention d'une pression prédéfinie dans le circuit consommateur d'air comprimé (70, 71), au moins un réservoir d'air (73) du circuit consommateur d'air comprimé appartenant au premier circuit consommateur d'air comprimé (70, 71) est rempli par le biais d'un agencement de soupape prioritaire (16).

19. Procédé selon la revendication 18, dans lequel pour un démarrage rapide du véhicule, un remplissage partiel de réservoirs de freinage a d'abord lieu, ensuite le premier circuit consommateur d'air comprimé (70, 71) et ensuite les réservoirs de freinage sont à nouveau remplis jusqu'à la pression d'ouverture d'une soupape de protection (20) réalisée en tant que soupape de débordement, et ensuite le réservoir d'air (73) appartenant au premier circuit consommateur d'air comprimé (70, 71) et d'autres réservoirs d'air sont remplis jusqu'à la pression de coupure.
